# EUROPEAN PATENT APPLICATION

(11) **EP 1 513 325 A1**
(43) Date of publication of application: **09.03.2005**
(21) Application number: 04020336.6
(22) Date of filing: 26.08.2004
(51) Int. Cl.: H04M 1/247, H04M 1/725

(54) **Portable terminal device, method and program for selecting a function of the device using keywords**

(30) Priority: 02.09.2003 JP 2003310209
(71) Applicant: NEC CORPORATION, Tokyo (JP)
(72) Inventor: Kamiyama, Yoshiyuki, Minato-ku, Tokyo (JP)
(74) Representative: Betten & Resch

(57) **Abstract**

Keywords corresponding to the function names of functions of a portable terminal device are stored in a keyword table 10, a used keyword which has used for searching for the function name is stored in a used keyword history storage 9, character data is provided in response to operation of an operating switch provided in the operating unit 1; a target keyword estimated by the character data provided from the operating unit 1 is found by a control circuit 2 from among the keywords stored in the used keyword history storage 9; the keyword table 10 is searched for a function name corresponding to the target keyword; and the function name is displayed on a display 4.

## Description

### BACKGROUND OF THE INVENTION

### 1. Field of the Invention

The present invention relates to a portable terminal device and a method and program for specifying a function of a portable terminal device and, in particular, to a portable terminal device and a method and program for specifying a function of a portable terminal device which searches a function name using a keyword.

### 2. Description of the Related Prior Art

Today's mobile phones and PHSs (Personal Handyphone Systems) include many functions such as internet access, electronic mailing,andintegrated camerafunctions,inaddition to basic voice communication functions. Portable terminal devices such as PDAs (Personal Digital Assistances) also have become equipped with as many functions as personal computers.

A method for specifying any of a number of functions of such portable terminal devices is disclosed in Japanese Patent Laid-Open No. 2000-216871.

The mobile phone disclosed in Japanese Patent Laid-Open No. 2000-216871 operates as follows. When an operator inputs a keyword through a ten-key keypad, a CPU searches for function names including the keyword among a number of function names contained beforehand in a table. If one function name is found, the CPU displays the function name alone on the display. When the operator depresses a decision key, the CPU activates the function associated with the function name. On the other hand, if more than one function name is found, the CPU displays the function names together with a cursor for selecting a function name on the display. When the operator moves the cursor to the position of a desired function name and depresses the decision key, the CPU activates the function associated with that function name at the cursor position.

In the prior-art mobile phone technology described above, the keywords that operators can input are limited to manufacturer-provided function names or their subset. The operator is not allowed to specify a function by using a different name. For example, if the operator wants to specify a function associated with the function name "Photography" the operator must enter the name or a keyword such as "Photo ..." and cannot use a different keyword such as "Image ..." or "Picture ...." Accordingly, unless the operator remembers the name of a function with a certain level of exactness, the operator cannot search a function name by inputting a keyword, furthermore, the operator cannot search a function name by using a favorite name.

### SUMMARY OF THE INVENTION

According to the present invention, there is provided a portable terminal device that uses a keyword to search for a function name, including: a keyword table for storing keywords corresponding to the function names of functions of the portable terminal device; a used keyword history storage that stores a used keyword which has used for searching for the function name; an operating unit having an operating switch and providing character data in response to operation of the operating switch; and a control circuit for searching for a target keyword estimated by the character data provided from the operating unit among the used keywords stored in the used keyword history storage, searching the keyword table for the function name corresponding to the target keyword, and causing the function name to be displayed on a display.

The control circuit of the portable terminal device of the present invention includes a keyword estimation section which, each time one character in the character data is provided from the operating unit, finds and outputs the target keyword estimated by the character data formed by the provided one character or characters from among the used keywords stored by the used keyword history storage; and a search section searching the keyword table for a function name corresponding to the target keyword outputted from the keyword estimation section.

The operating unit of the portable terminal device of the present invention provides an edit-keyword instruction to edit the keyword stored in the keyword table or an execute-function instruction to execute a function indicated by the function name corresponding to the target keyword in response to operation of an operating switch provided in the operating unit; and the control circuit executes the function indicated by the function namedisplayedonthedisplayiftheexecute-functioninstruction is provided from the operating unit, and edits the keywords stored in the keyword table and corresponds to the function name displayed on the display if the edit-keyword instruction is provided from the operating unit.

According to the present invention, there is provided a method for specifying a function of a portable terminal device that uses a keyword to search for a function name, including the steps of: storing keywords corresponding to the function names of functions of the portable terminal device in a keyword table; storing in a storage a used keyword which has used for searching for the function name; generating character data in response to operation of an operating switch provided in the portable terminal device; and searching a target keyword estimated by the character data from among the used keywords stored in the storage; searching the keyword table for the function name corresponding to the target keyword; and displaying the function name.

The method for specifying a function of a portable terminal device further includes the steps of: generating an edit-keyword instruction to edit the keyword stored in the keyword table or an execute-function instruction to execute a function indicated by the function name corresponding to the target keyword in response to operation of an operating switch provided in the portable terminal device; executing the function indicated by the displayed function name if the execute-function instruction is generated; and editing the keywords stored in the keyword table and corresponds to the displayed function name if the edit-keyword instruction is generated.

### BRIEF DESCRIPTION OF THE DRAWINGS

The objects, features and advantages of the present invention will become apparent from the following detailed description when taken with the accompanying drawings in which:
FIG. 1 is a block diagram showing a portable terminal device according to an embodiment of the present invention;
FIG. 2 is a flowchart showing one example of operations according to the present embodiment;
FIG. 3 A shows an example of an idle screen;
FIG. 3 B shows an example of a search result screen;
FIG. 4 shows an example of a text box entry;
FIG. 5 shows an example of used keyword history storage;
FIG. 6 shows an example of a keyword table; and
FIG. 7 shows an example of keyword edit screen.

### DETAILED DESCRIPTION OF THE PREFERRED EMBODIMENTS

The embodiments of the present invention will be described below with reference to the accompanying drawings.

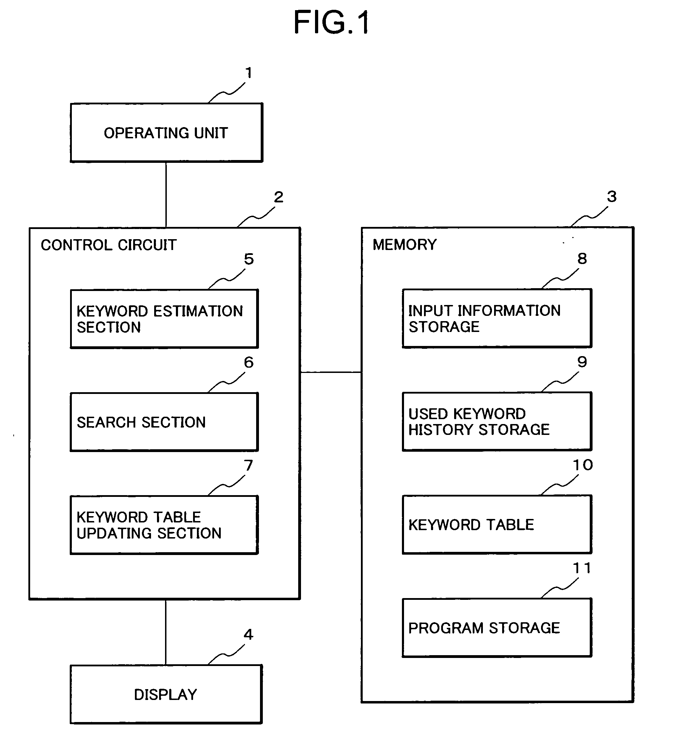

FIG. 1 is a block diagram showing a portable terminal device according to an embodiment of the present invention.

The embodiment shown in FIG. 1 includes an operating unit 1, a display 4, a memory 3, and a control circuit 2.

The operating unit 1 includes operating switches. When a user operates any of the operating switches, the operating unit 1 outputs characters sequentially, in response to the operations of the switches by the user. The characters outputted make up a part of or an entire keyword for searching for a function of the portable terminal device. The operating unit 1 also outputs an "Execute function instruction" for causing a function to be executed according to an operation of the operating switch operated by the user. Or, it outputs an "Edit keyword instruction" for editing a keyword associated with a function.

The memory 3 includes an input information storage 8, a used keyword history storage 9, a keyword table 10, and a program storage 11.

The input information storage 8 receives the characters constituting a keyword provided from the operating unit 1 and stores them as a character string. It also stores an "Execute function instruction" or "Edit keyword instruction" provided from the operating unit 1.

The keyword table 10 stores keywords associated with the function names of functions which the portable terminal device comprises. The keywords stored in the keyword table 10 are default keywords preset by the manufacture and user keywords entered by the user.

The used keyword history storage 9 stores keywords ( used keywords) used for searching for a function name in the past together with the frequency with which they were used.

The program storage 11 stores a program for specifying function of the portable terminal device and a program for editing keywords. Furthermore, it stores programs for performing the functions of the portable terminal device and programs required for the portable terminal device to operate.

The control circuit 2 controls the execution by a computer such as a CPU of a program stored in the program storage 11 according to the program. For example, when the CPU executes a program for specifying a function of the portable terminal device, a keyword estimation section 5 reads from the input information storage 8 a character string provided from the operating unit 1. The keyword estimation section 5 then finds a keyword (a target keyword) estimated by (preferably including) the character string among the keyword stored in the used keyword history storage 9. Then, a search section 6 searches the keyword table 10 for a function name that matches the keyword found. Then, the control circuit 2 causes the found function name to be displayed on the display 4. If an "Execute function instruction" is stored in the input information storage 8, the CPU executes the program for executing the function displayed. The execution of the program causes the control circuit 2 provides control involved in the function according to the program. IF a "Edit keyword instruction" is stored in the input information storage 8, the CPU executes a program for editing a keyword to cause a keyword table updating section 7 to edit a keyword associated with the displayed function.

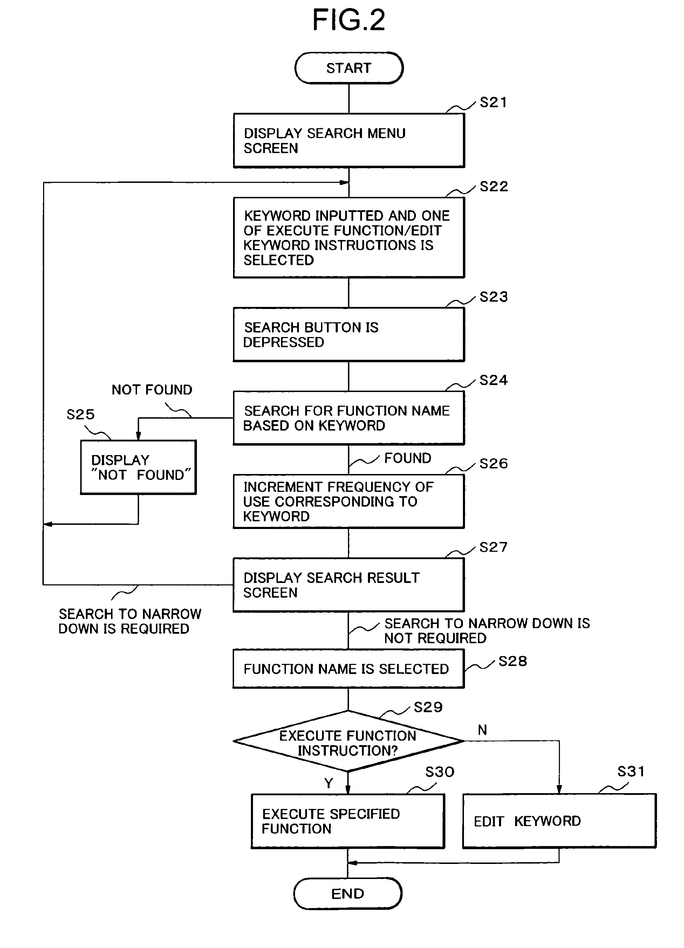

Operation of the mobile terminal device according to the present embodiment will be described below with reference to FIGS. 2 to 7.

FIG. 2 is a flowchart illustrating an example of operation of the mobile terminal device according to the present embodiment.

When the mobile terminal device is powered on in FIG. 1, the process proceeds to step 21 in FIG. 2.

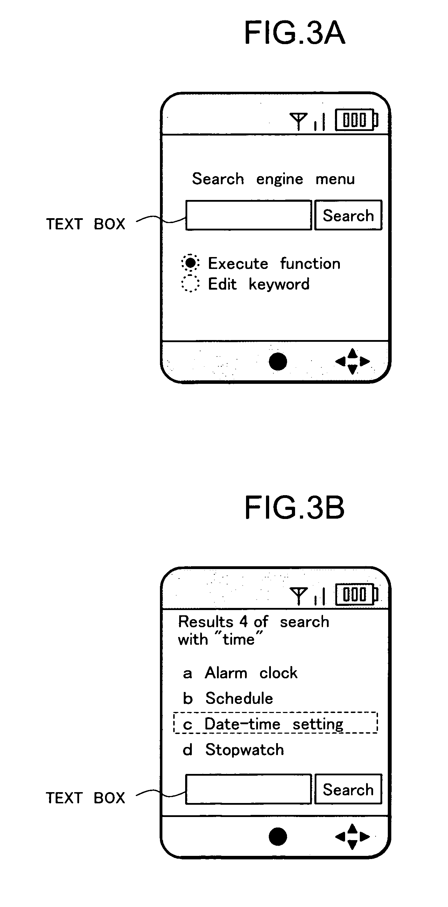

At step 21 in FIG. 2, the control circuit 2 causes a search menu screen to be displayed on the display 4 as an idle screen as shown in FIG. 3 A.

In this screen, text box, a search button, an execute function radio button, and edit keyword radio button are displayed. In the text box, a character (string) inputted by the user through operation of operating switches and a keyword associated with the character (string) are displayed. The search button is a button used for starting a function search based on a keyword displayed in the text button. The execute function radio button is a radio button used for providing an instruction to execute a function found after a function is found. The edit keyword radio button is a radio button for providing an instruction for editing a keyword associated with a displayed function.

On power-on, the control circuit 2 positions a cursor at the left-most end of the text box and displays blanks by default. The execute function radio button is selected (a black circle indicates that the button is selected).

Four triangles are displayed in the bottom-right corner of FIG. 3 A, which indicate the direction of the movement of the cursor on the screen. These triangles are associated with cursor switches provided in the operating unit 1. When the user presses one of the cursor switches, the control circuit 2 moves the cursor in the direction indicated by the triangle corresponding to the depressed switch.

A black circle is displayed in the bottom center of the display shown in FIG. 3 A, which indicates a decision switch for confirming an item specified using the cursor. The decision switch is provided in the operating unit 1.

At. step 22 in FIG. 2, the idle screen is displayed. If an indication, "Not found," is displayed below the text box, that is, if the process has returned to step 22 from step 25, the control circuit 2 performs the following operations. When the user depresses any of the switches provided in the operating unit 1 and the control circuit 2 receives the output from the operating unit 1 that indicates the switch depression, the control circuit 2 deletes the indication "Not found", positions the cursor at the left most end of the text box and displays blanks in the text box. On the other hand, if the process has proceeded to step 22 from step 21 or step 27, the control circuit 2 does not performs the above-described operations. If the process has proceeded to step 22 from step 21, the idle screen is displayed without the indication "Not found" below the text box. If the process has proceeded to step 22 from step 27, a search result screen as shown in FIG. 3 B is displayed.

When the user operates operating switches in the operating unit 1 to input characters, the operating unit 1 outputs the inputted characters in the order in which they are inputted, in response to the operations by the user of the switches. Each time a character is outputted from the operating unit 1, the control circuit 2 receives and stores it in the input information storage 8 in order. Consequently, these characters are stored as a character string. The control circuit 2 displays these characters in sequence as a character string in the text box displayed on the screen. The keyword estimation section 5 finds and outputs a keyword estimated by the character string made up of the characters displayed in the text box among keywords stored by the used keyword history storage 9. The control circuit 2 displays the keyword next to the inputted character string in the text box. The keyword estimation unit 5 and the control circuit 2 perform these operations each time a character is outputted from the operating unit 1 and displayed on in the text box.

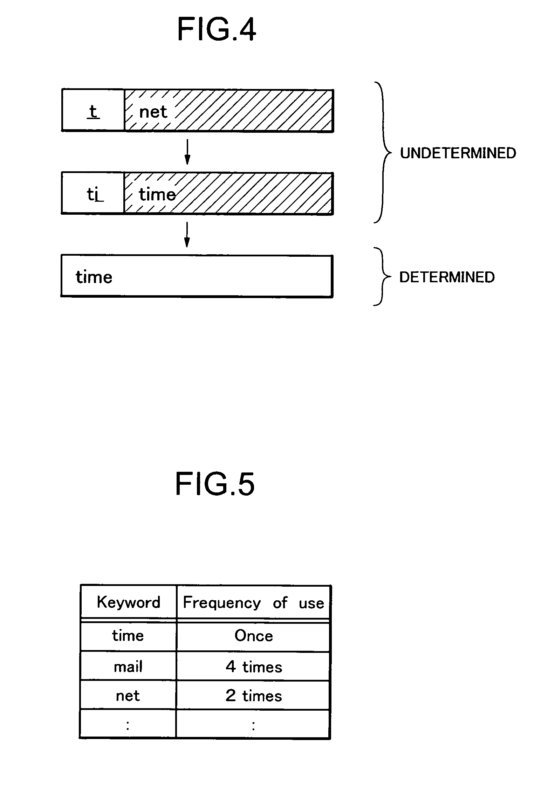

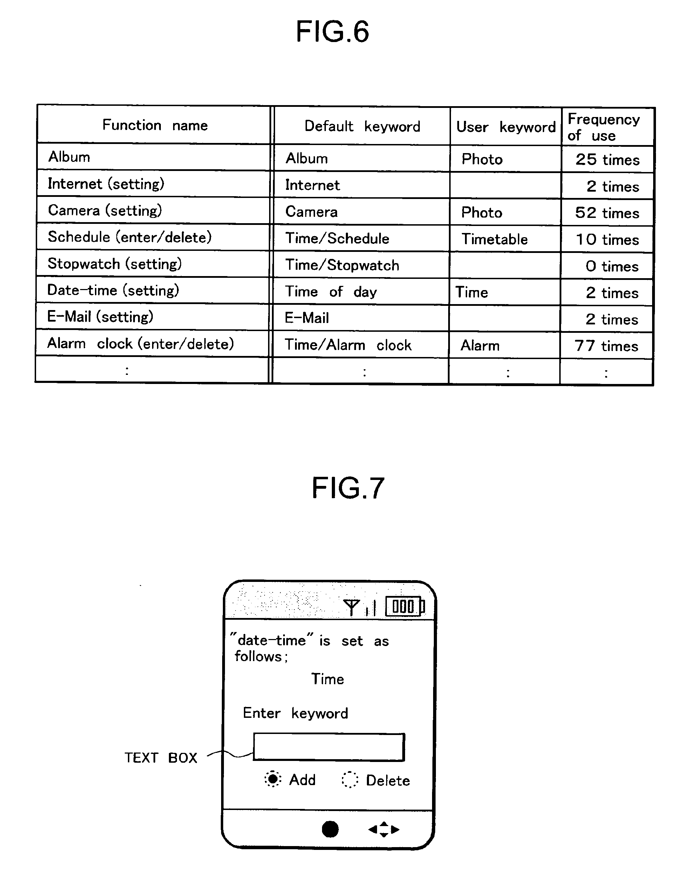

For example, if the user wants to use the word "time" as a keyword, the user operates an operating switch to input the character "t", the operating unit 1 outputs the character "t". The control circuit 2 receives the character "t" and displays "t" in the text box. Then, the keyword estimation section 5 finds a keyword including the character "t" in the used keyword history storage 9 shown in FIG. 5. The control circuit 2 outputs a keyword that was frequently used among keywords including "t". In this example, the word "net" is outputted. The control circuit 2 displays the word "net" next to "t" displayed in the text box as shown in FIG. 4. Then, when the user operates an operating switch in the operating unit 1 to input a character "i," the control circuit 2 receives the character "i" from the operating unit 1 and displays it next to the character "t" displayed in the text box. The keyword estimation section 5 finds and outputs a keyword estimated by the character pair "ti" in the used keyword history storage 9 shown in FIG. 5. In this example, the word "time" is outputted.

The control circuit 2 displays the word "time" next to the character pair "ti" displayed in the text box as shown in FIG. 4. If the use wants to use the word "time" as a keyword, then the user presses the decision switch. The operating unit 1 outputs a signal indicating that the decision switch is depressed. The control circuit 2 receives the signal, decides the word "time" as a keyword to use, and displays the word "time" alone as shown as "Determined" in FIG. 4 in the text box.

According to the present embodiment, keywords used in the past are stored in the used keyword history storage 9. Each time a character is provided from the operating unit 1 by a user operation, the keyword estimation section 5 retrieves a keyword estimated by the character (string) from the used keyword history storage 9. Thus, the user can readily specify a desired keyword without having to input all the characters of the keyword. Therefore, the user can search a function name even if the user does not remember the keyword exactly. This can be done because a keyword or a part of a keyword that enables a function name to be estimated is specified.

If the user wants to edit a keyword associated with a found function while the idle screen is displayed, the user selects the edit keyword radio button. If the user wants to cause a found function to be executed, the user selects the execute function radio button. The selection of radio buttons is made as follows. The control circuit 2 moves the cursor to the radio button chosen by the user in response to the operation of the cursor switch by the user. When the user depresses the decision switch, the control circuit 2 positions the black circle to select the radio button at the cursor position. Then, the control circuit 2 stores the "Execute function instruction" or "Edit keyword instruction" in the input information storage 8 according to which of the radio buttons is selected.

At step 23 in FIG. 2, the user operates the cursor switch so as to move the cursor to the search button. In response to the operation of the cursor switch by the user, the control circuit 2 moves the cursor to the search button. When the user depresses the decision switch, the control circuit 2 determines that the search button has been depressed.

At step 24 in FIG. 2, the search section 6 searches the keyword table 10 shown in FIG. 6 for the keyword ("time", for example) displayed in the text box. It first searches for words "time" in the user keywords in the keyword table 10. If the word "time" is found in the user keywords, the search section 6 provides the function name corresponding to the word "time" as the result of the search. If more than one occurrence of "time" is found, then the frequencies of the occurrences of "time" are checked and the occurrence of "time" that was most frequently used is used and the function name associated with that occurrence is provided as the result of the search. The process then proceeds to step 26. If "time" is not found in the user keywords, then the search section 6 makes a search within the default keywords in the keyword table 10 for "time." If the word "time" is found in the default keywords, then the function name associated with the word "time" is provided as the result of the search. If more than one occurrence of "time" is found in the default keywords, then the frequencies of the occurrences of "time" are checked and the most frequently used occurrence of "time" is used to provide the function name corresponding to that occurrence is provided as the result of the search. Then the process proceeds to step 26. On the other hand, if the word "time" is not found in the default keywords, the process proceeds to step 25.

In this way, according to the present embodiment, a user keyword is first used to search the keyword table 10 for a function name corresponding to a specified keyword. That is, the specified keyword is searched for first in the user keywords registered by the user. Thus, the present embodiment allows the user to use a desired mnemonic name preset by the user at will to search for a function name.

At step 25 in FIG. 2, the control circuit 2 displays "Not found, " for example, below the search text box and then proceeds to step 22.

At step 26 in FIG. 2, the control circuit 2 increments the frequency corresponding to the keyword used for the search that provided the result at step 24. In particular, it increments the frequency associated with the keyword which is contained in the used keyword history storage 9. It also increments the frequency associated with the keyword in the keyword table 10.

At step 27 in FIG. 2, the control circuit 2 displays a search result screen on the display 4, as shown in FIG. 3 B. If the items (a to b) displayed in the screen contain the ultimate function name, then the process proceeds to step 28 in order to execute the function indicated by the function name, or to edit the keyword associated with the function indicated by the function name. On the other hand, if the items displayed in the screen do not contain the ultimate function name (for example, if a broader term to which the ultimate function name belongs or the name of a group to which the ultimate function name belongs is displayed), then a more specific search must be performed. Therefore, the process proceeds to step 22, where a keyword is entered in the text box.

At step 28 in FIG. 2, if the user wants to select the function name under item c, for example, in the search result screen shown in FIG. 3 B, the user operates the cursor switch so as to move the cursor to item c. In response to the operation of the cursor switch by the user, the control circuit 2 moves the cursor to the function name under item c. When the user depresses the decision switch, the control circuit 2 accepts the selection of the function name under item c.

At step 29 in FIG. 2, the control circuit 2 checks the input information storage 8 to see which of the "Execute function instruction" and "Edit keyword instruction" is stored. If the "Execute function instruction" is stored, the process proceeds to step 30. If the "Edit keyword instruction" is stored, the process proceeds to step 31.

At step 30 in FIG. 2, the control circuit 2 executes the function associated with the function name "date-time" selected at step 28.

At step 31 in FIG. 2, the control circuit 2 displays the keyword edit screen on the display 4 as shown in FIG. 7. Displayed in this screen are the function name "date-time" and the user keyword "time" associated with the function name. Also displayed are a text box for entering a keyword to edit and radio buttons for selecting between addition and deletion of the entered keyword. The cursor is positioned at the left most end of the text box.

If the user wants to add "date" as a user keyword associated with the function name "date-time", the user operates operating switches to display "date" in the text box. In response to the operations of the operating switches, the control circuit 2 displays the word "date" in the text box, as in the case where it has displayed the word "time" in the text box at step 22. In order to select the "Add" radio button, the user operates the cursor switch to move the cursor to the "Add" radio button. In response to the operation of the operating switch by the user, the control circuit 2 moves the cursor to the "Add" radio button. When the user depresses the decision switch, the keyword table updating section 7 adds the word "date" as a user keyword for the function name "date-time" in the keyword table 10 shown in FIG. 6. On the other hand, when the user enters the word "time" in the text box, selects the "Delete" radio button, and depresses the decision switch, the keyword table updating section 7 deletes the user keyword "time" for the function name "date-time" from the keyword table 10 shown in FIG. 6.

While the present invention has been described in connection with certain preferred embodiments, it is to be understood that the subject matter encompassed by the present invention is not limited to those specific embodiments. On the contrary, it is intended to include all alternatives, modifications, and equivalents as can be included within the spirit and scope of the following claims.

According to another embodiment,
keywords corresponding to the function names of functions of a portable terminal device are stored in a keyword table 10, a used keyword which has used for searching for the function name is stored in a used keyword history storage 9, character data is provided in response to operation of an operating switch provided in the operating unit 1; a target keyword estimated by the character data provided from the operating unit 1 is found by a control circuit 2 from among the keywords stored in the used keyword history storage 9; the keyword table 10 is searched for a function name corresponding to the target keyword; and the function name is displayed on a display 4.

## Claims

1. A portable terminal device that uses a keyword to search for a function name, comprising:
a keyword table for storing keywords corresponding to the function names of functions of said portable terminal device;
a used keyword history storage that stores a used keyword which has used for searching for said function name;
an operating unit having an operating switch and providing character data in response to operation of said operating switch; and
a control circuit for searching for a target keyword estimated by said character data provided from said operating unit among said used keywords stored in said used keyword history storage, searching said keyword table for the function name corresponding to said target keyword, and causing said function name to be displayed on a display.

2. The portable terminal device according to claim 1, wherein said operating unit provides an execution instruction in response to the operation of said operating switch and said control circuit executes a function indicated by said function name displayed on said display in response to said execution instruction.

3. The portable terminal device according to claim 1 or 2, wherein saidcontrolcircuitcomprisesakeywordestimationsectionwhich, each time one character in said character data is provided from said operating unit, finds and outputs said target keyword estimated by said character data formed by said provided one character or characters from among said used keywords stored by said used keyword history storage; and
a search section searching said keyword table for the function name corresponding to said target keyword outputted from said keyword estimation section.

4. The portable terminal according to claim 3, wherein said used keyword history storage associates and stores said used keyword which has been used for searching said function name with the frequency of use of said keyword, and said keyword estimation section selects more frequently used one of keywords if said keyword estimation section finds the keywords of the same degree of similarity from said used keywords stored by said used keyword history storage.

5. The portable terminal device according one of claims 1 or 4, wherein said keywords stored in said keyword table includes preset default keywords and user keywords set by instruction from a user.

6. The portable terminal device according to claim 5, wherein when searching said keyword table for said function name corresponding to said target keyword, said control circuit checks said user keywords to see if there is a keyword that matches said target keyword, and if not, checks said default keywords to see if there is a keyword that matches said target keyword, and if there is a keyword in said user keywords or said default keywords that matches said target keyword, provides a function name corresponding to the keyword as the result of the search.

7. The portable terminal device according to one of claims 1 or 6, wherein:
said operating unit provides an edit-keyword instruction to edit said keyword stored in said keyword table or an execute-function instruction to execute a function indicated by the function name corresponding to said target keyword in response to operation of an operating switch provided in said operating unit; and
said control circuit executes the function indicated by said function name displayed on said display if said execute-function instruction is provided from said operating unit, and edits said keywords stored in said keyword table and corresponds to said function name displayed on said display if said edit-keyword instruction is provided from said operating unit.

8. The portable terminal device according to claim 7, wherein said keywords stored in said keyword table includes preset default keywords and user keywords set by instruction from a user.

9. The portable terminal device according to claim 8, wherein the edit of said keyword performed by said control circuit is an edit of said user keyword, said edit including addition and deletion of said user keyword.

10. The portable terminal device according to claim 7, wherein said controlcircuitcomprisesa keyword estimationsection which, each time one character in said character data is provided from said operating unit, finds and outputs said target keyword estimated by said character data formed by said provided character and previously provided character or characters if any, from among said used keywords stored by said used keyword history storage;
a search section searching said keyword table for a function corresponding to said target keyword outputted from said keyword estimation section; and
a keyword table updating section editing said keyword stored in said keyword table if said edit-keyword instruction is provided from said operating unit.

11. A method for specifying a function of a portable terminal device that uses a keyword to search for a function name, comprising the steps of:
storing keywords corresponding to the function names of functions of said portable terminal device in a keyword table;
storing in a storage a used keyword which has used for searching for said function name;
generating character data in response to operation of an operating switch provided in said portable terminal device; and
searching a target keyword estimated by said character data from among said used keywords stored in said storage;
searching said keyword table for the function name corresponding to said target keyword; and displaying said function name.

12. The method for specifying a function of a portable terminal device according to claim 11, further comprising the steps of:
generating an execution instruction in response to an operation of said operating switch; and
executing a function indicated by said displayed function name in accordance to said execution instruction.

13. The method for specifying a function of a portable terminal device according to claim 11 or 12, wherein said generated character data is a character string which is formed by one or more of characters each time one character in said character data is generated.

14. The method for specifying a function of a portable terminal device according to claim 13, wherein said used keyword which has been used for searching said function name is associated and stored in said storage with the frequency of use of said used keyword, and if keywords of the same degree of similarity is found from said used keywords stored in said storage, more frequently used one of the keywords is selected.

15. The method for specifying a function of a portable terminal device according to one of claims 11 to 14 , wherein said keywords stored in said keyword table includes preset default keywords and user keywords set by instruction from a user.

16. The method for specifying a function of a portable terminal device according to claim 15, wherein when said keyword table is searched for said function name corresponding to said target keyword, said user keywords are checked to see if there is a keyword that matches said target keyword, and if not, saiddefault keywords are checked to see if there is a keyword that matches said target keyword, and if there is a keyword in said user keywords or said default keywords that matches said target keyword, a function name corresponding to the keyword is provided as the result of the search.

17. The method for specifying a function of a portable terminal device according to one of claims 11 to 16, further comprising the steps of:
generating an edit-keyword instruction to edit said keyword stored in said keyword table or an execute-function instruction to execute a function indicated by the function name corresponding to said target keyword in response to operation of an operating switch provided in said portable terminal device;
executing the function indicated by said displayed function name if said execute-function instruction is generated; and
editing said keywords stored in said keyword table and corresponds to said displayed function name if said edit-keyword instruction is generated.

18. The method for specifying a function of a portable terminal device according to claim 17, wherein said keywords stored in said keyword table includes preset default keywords and user keywords set by instruction from a user.

19. The method for specifying a function of a portable terminal device according to claim 18, wherein said edit of said keyword is an edit of said user keyword, said edit including addition and deletion of said user keyword.

20. The method for specifying a function of a portable terminal device according to claim 17, wherein each time one character in said character data is generated in said step of generating character data, a keyword estimated by said character data formed by said generated character and previously provided character or characters if any, is found from among said used keywords stored in said storage.

21. A program for causing a computer to perform a process for specifying a function of a portable terminal device that uses a keyword to search for a function name, said program causing said computer to perform the steps of:
storing keywords corresponding to the function names of functions of said portable terminal device in a keyword table;
storing in a storage a used keyword which has used for searching for said function name;
generating character data in response to operation of an operating switch provided in said portable terminal device; and
searching a target keyword estimated by said character data from among said used keywords stored in said storage;
searching said keyword table for the function name corresponding to said target keyword; and
displaying said function name.

22. The program according to claim 21, causing said computer to perform the steps of:
generating an execution instruction in response to an operation of said operating switch; and
executing a function indicated by said displayed function name in accordance to said execution instruction.

23. The program according to claim 21 or 22, wherein said generated character data is a character string which is formed by one or more of characters each time one character in said character data is generated.

24. The program according to one claims 21 to 23, causing said computer to perform the steps of:
generating an edit-keyword instruction to edit said keyword stored in said keyword table or an execute-function instruction to execute a function indicated by the function name corresponding to said target keyword in response to operation of an operating switch provided in said portable terminal device;
executing the function indicated by said displayed function name if said execute-function instruction is generated; and
editing said keywords stored in said keyword table and corresponds to said displayed function name if said edit-keyword instruction is generated.
